# EUROPEAN PATENT SPECIFICATION

(11) **EP 2 610 462 B1**
(45) Date of publication and mention of the grant of the patent: **24.03.2021**
(21) Application number: 12197866.2
(22) Date of filing: 18.12.2012
(51) Int. Cl.: F02C 3/107, F02K 1/09, F02K 1/72, F02K 1/76, B64D 33/04, B64D 27/26, F02K 3/075

(54) **Gas turbine engine**
Gasturbinenmotor
Moteur à turbine à gaz

(30) Priority: 30.12.2011 US 201113340988
(43) Date of publication of application: 03.07.2013
(73) Proprietor: Raytheon Technologies Corporation, Farmington, CT 06032 (US)
(72) Inventor: Suciu, Gabriel L., Glastonbury, CT 06033 (US); Merry, Brian D., Andover, CT 06232 (US); Dye, Christopher M., San Diego, CA 92117 (US); Johnson, Steven B., Marlborough, CT 06447 (US); Schwarz, Frederick M., Glastonbury, CT 06033 (US)
(74) Representative: Dehns

(56) References cited:
- EP-A2- 2 028 359
- EP-A2- 2 098 704
- EP-A2- 2 157 305
- US-A1- 2005 257 528
- US-A1- 2011 120 078
- US-A1- 2011 120 081
- US-A1- 2011 167 790

## Description

### BACKGROUND

The present invention relates to a gas turbine engine.

A gas turbine engine may be mounted at various points on an aircraft such as a pylon integrated with an aircraft structure. An engine mounting configuration ensures the transmission of loads between the engine and the aircraft structure. The loads typically include the weight of the engine, thrust, aerodynamic side loads, and rotary torque about the engine axis. The engine mount configuration must also absorb the deformations to which the engine is subjected during different flight phases and the dimensional variations due to thermal expansion and retraction.

One conventional engine mounting configuration includes a pylon having a forward mount and an aft mount with relatively long thrust links which extend forward from the aft mount to the engine intermediate case structure. Although effective, one disadvantage of this conventional type mounting arrangement is the relatively large "punch loads" into the engine cases from the thrust links which react the thrust from the engine and couple the thrust to the pylon. These loads tend to distort the intermediate case and the low pressure compressor (LPC) cases. The distortion may cause the clearances between the static cases and rotating blade tips to increase which may negatively affect engine performance and increase fuel burn.

US 2011/0120081, US 2011/0120078 , US 2011/167790 A1, EP 2157305 A2, US 2005/257528 A1 and EP 2028359 are all concerned with variable area fan nozzles for gas turbine engines.

### SUMMARY

According to the present invention, there is provided a gas turbine engine as claimed in claim 1.

### BRIEF DESCRIPTION OF THE DRAWINGS

The various features and advantages of this invention will become apparent to those skilled in the art from the following detailed description of the currently disclosed embodiment. The drawings that accompany the detailed description can be briefly described as follows:
Figure 1A is a general schematic sectional view through a gas turbine engine along the engine longitudinal axis;
Figure 1B is a general sectional view through a gas turbine engine along the engine longitudinal axis illustrating an engine static structure case arrangement on the lower half thereof;
Figure 1C is a side view of an mount system illustrating a rear mount attached through an engine thrust case to a mid-turbine frame between a first and second bearing supported thereby;
Figure 1D is a forward perspective view of an mount system illustrating a rear mount attached through an engine thrust case to a mid-turbine frame between a first and second bearing supported thereby;
Figure 2A is a top view of an engine mount system;
Figure 2B is a side view of an engine mount system within a nacelle system;
Figure 2C is a forward perspective view of an engine mount system within a nacelle system;
Figure 3 is a side view of an engine mount system within another front mount;
Figure 4A is an aft perspective view of an aft mount;
Figure 4B is an aft view of an aft mount of Figure 4A;
Figure 4C is a front view of the aft mount of Figure 4A;
Figure 4D is a side view of the aft mount of Figure 4A;
Figure 4E is a top view of the aft mount of Figure 4A;
Figure 5A is a side view of the aft mount of Figure 4A in a first slide position; and
Figure 5B is a side view of the aft mount of Figure 4A in a second slide position.

### DETAILED DESCRIPTION OF THE DISCLOSED EMBODIMENT

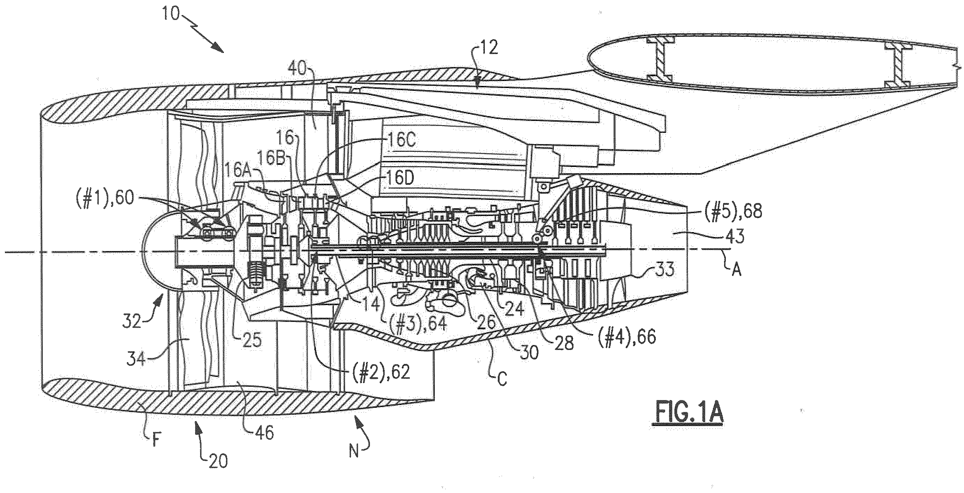

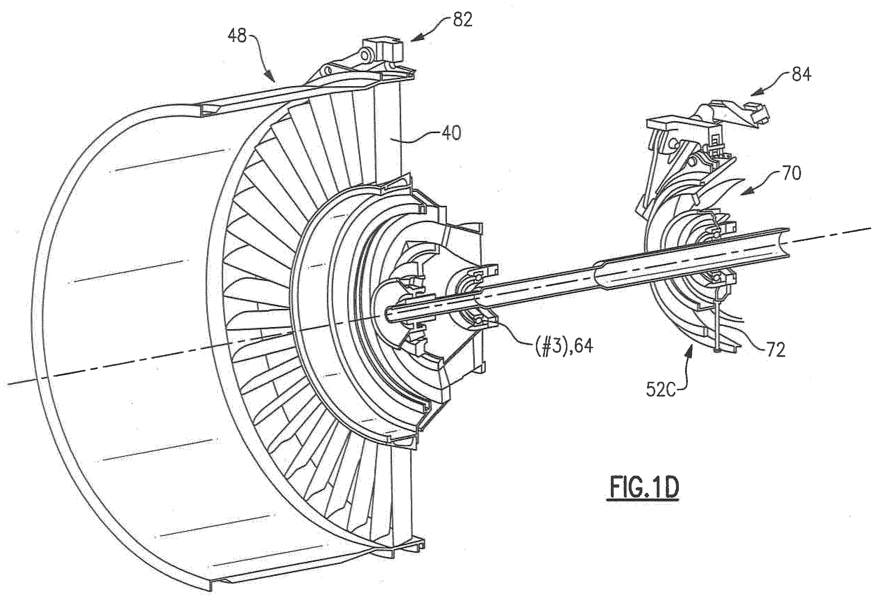

Figure 1A illustrates a general partial fragmentary schematic view of a gas turbofan engine 10 suspended from an engine pylon 12 within an engine nacelle assembly N as is typical of an aircraft designed for subsonic operation.

The turbofan engine 10 includes a core engine within a core nacelle C that houses a low spool 14 and high spool 24. The low spool 14 includes a low pressure compressor 16 and low pressure turbine 18. The low spool 14 drives a fan section 20 connected to the low spool 14 through a gear train 25.

The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 in one non-limiting embodiment is a high-bypass geared architecture aircraft engine. In one disclosed, non-limiting embodiment, the engine 10 bypass ratio is greater than about six (6:1), with an example embodiment being greater than ten (10:1), the gear train 25 is an epicyclic gear train such as a planetary gear system or other gear system with a gear reduction ratio of greater than about 2.3 and the low pressure turbine 18 has a pressure ratio that is greater than about five (5:1). In one disclosed embodiment, the engine 10 bypass ratio is greater than about ten (10:1), the turbofan diameter is significantly larger than that of the low pressure compressor 16, and the low pressure turbine 18 has a pressure ratio that is greater than about five (5:1). The gear train 25 may be an epicycle gear train such as a planetary gear system or other gear system with a gear reduction ratio of greater than about 2.5:1. It should be understood, however, that the above parameters are only exemplary of one embodiment of a geared architecture engine.

Airflow enters the fan nacelle F which at least partially surrounds the core nacelle C. The fan section 20 communicates airflow into the core nacelle C to the low pressure compressor 16. Core airflow compressed by the low pressure compressor 16 and the high pressure compressor 26 is mixed with the fuel in the combustor 30 where is ignited, and burned. The resultant high pressure combustor products are expanded through the high pressure turbine 28 and low pressure turbine 18. The turbines 28, 18 are rotationally coupled to the compressors 26, 16 respectively to drive the compressors 26, 16 in response to the expansion of the combustor product. The low pressure turbine 18 also drives the fan section 20 through gear train 25. A core engine exhaust E exits the core nacelle C through a core nozzle 43 defined between the core nacelle C and a tail cone 33.

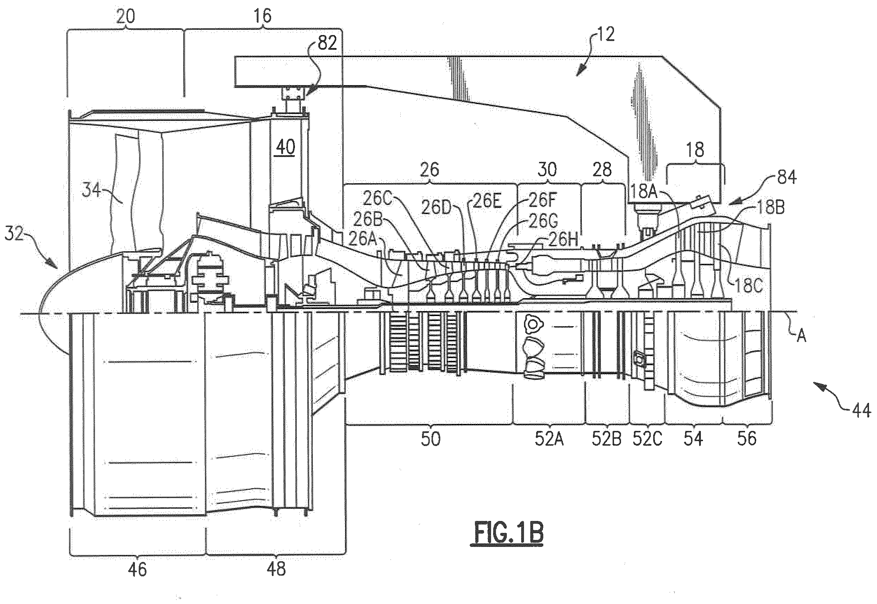

With reference to Figure 1B, the low pressure turbine 18 includes a low number of stages, which, in the illustrated non-limiting embodiment, includes three turbine stages, 18A, 18B, 18C. The gear train 22 operationally effectuates the significantly reduced number of stages within the low pressure turbine 18. The three turbine stages, 18A, 18B, 18C facilitate a lightweight and operationally efficient engine architecture. It should be appreciated that a low number of stages contemplates three to six stages. Low pressure turbine 18 pressure ratio is pressure measured prior to inlet of low pressure turbine 18 as related to the pressure at the outlet of the low pressure turbine 18 prior to exhaust nozzle.

Thrust is a function of density, velocity, and area. One or more of these parameters can be manipulated to vary the amount and direction of thrust provided by the bypass flow B. The Variable Area Fan Nozzle ("VAFN") 42 operates to effectively vary the area of the fan nozzle exit area 44 to selectively adjust the pressure ratio of the bypass flow B in response to a controller C. Low pressure ratio turbofans are desirable for their high propulsive efficiency. However, low pressure ratio fans may be inherently susceptible to fan stability/flutter problems at low power and low flight speeds. The VAFN 42 allows the engine to change to a more favorable fan operating line at low power, avoiding the instability region, and still provide the relatively smaller nozzle area necessary to obtain a high-efficiency fan operating line at cruise.

A significant amount of thrust is provided by the bypass flow B due to the high bypass ratio. The fan section 20 of the engine 10 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without the Fan Exit Guide Vane ("FEGV") system 36. The low fan pressure ratio as disclosed herein is less than 1.45. "Low corrected fan tip speed" is the actual fan tip speed in ft/sec divided by an industry standard temperature correction of [(Tambient deg R) / 518.7)^0.5]. The "Low corrected fan tip speed" as disclosed herein according to one non-limiting embodiment is less than about 1150 ft / second (350.52 m/s).

As the fan blades within the fan section 20 are efficiently designed at a particular fixed stagger angle for an efficient cruise condition, the VAFN 42 is operated to effectively vary the fan nozzle exit area 44 to adjust fan bypass air flow such that the angle of attack or incidence on the fan blades is maintained close to the design incidence for efficient engine operation at other flight conditions, such as landing and takeoff to thus provide optimized engine operation over a range of flight conditions with respect to performance and other operational parameters such as noise levels.

The engine static structure 44 generally has sub-structures including a case structure often referred to as the engine backbone. The engine static structure 44 generally includes a fan case 46, an intermediate case (IMC) 48, a high pressure compressor case 50, a combustor case 52A, a high pressure turbine case 52B, a thrust case 52C, a low pressure turbine case 54, and a turbine exhaust case 56 (Figure 1B). Alternatively, the combustor case 52A, the high pressure turbine case 52B and the thrust case 52C may be combined into a single case. It should be understood that this is an exemplary configuration and any number of cases may be utilized.

The fan section 20 includes a fan rotor 32 with a plurality of circumferentially spaced radially outwardly extending fan blades 34. The fan blades 34 are surrounded by the fan case 46. The core engine case structure is secured to the fan case 46 at the IMC 48 which includes a multiple of circumferentially spaced radially extending struts 40 which radially span the core engine case structure and the fan case 20.

The engine static structure 44 further supports a bearing system upon which the turbines 28, 18, compressors 26, 16 and fan rotor 32 rotate. A #1 fan dual bearing 60 which rotationally supports the fan rotor 32 is axially located generally within the fan case 46. The #1 fan dual bearing 60 is preloaded to react fan thrust forward and aft (in case of surge). A #2 LPC bearing 62 which rotationally supports the low spool 14 is axially located generally within the intermediate case (IMC) 48. The #2 LPC bearing 62 reacts thrust. A #3 fan dual bearing 64 which rotationally supports the high spool 24 and also reacts thrust. The #3 fan bearing 64 is also axially located generally within the IMC 48 just forward of the high pressure compressor case 50. A #4 bearing 66 which rotationally supports a rear segment of the low spool 14 reacts only radial loads. The #4 bearing 66 is axially located generally within the thrust case 52C in an aft section thereof. A #5 bearing 68 rotationally supports the rear segment of the low spool 14 and reacts only radial loads. The #5 bearing 68 is axially located generally within the thrust case 52C just aft of the #4 bearing 66. It should be understood that this is an exemplary configuration and any number of bearings may be utilized.

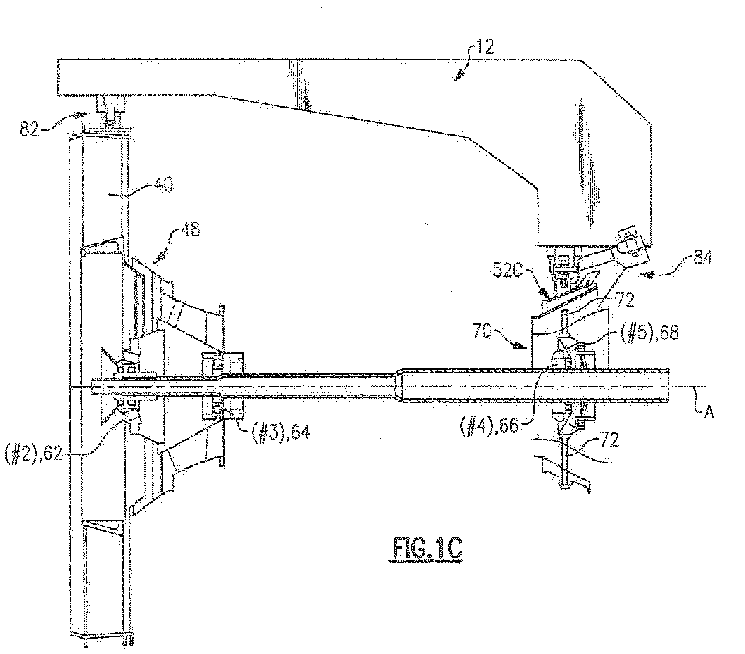

The #4 bearing 66 and the #5 bearing 68 are supported within a mid-turbine frame (MTF) 70 to straddle radially extending structural struts 72 which are preloaded in tension (Figures 1C-1D). The MTF 70 provides aft structural support within the thrust case 52C for the #4 bearing 66 and the #5 bearing 68 which rotatably support the spools 14, 24.

A dual rotor engine such as that disclosed in the illustrated embodiment typically includes a forward frame and a rear frame that support the main rotor bearings. The intermediate case (IMC) 48 also includes the radially extending struts 40 which are generally radially aligned with the #2 LPC bearing 62 (Figure 1B). It should be understood that various engines with various case and frame structures will benefit from the present invention.

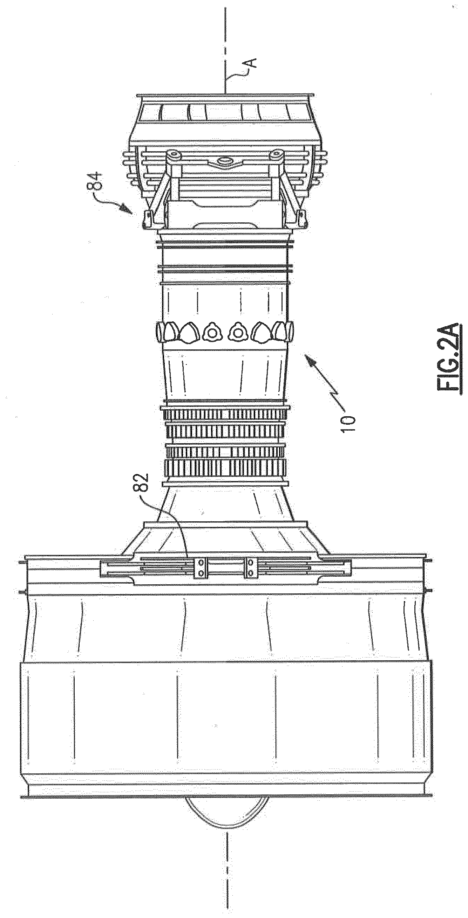

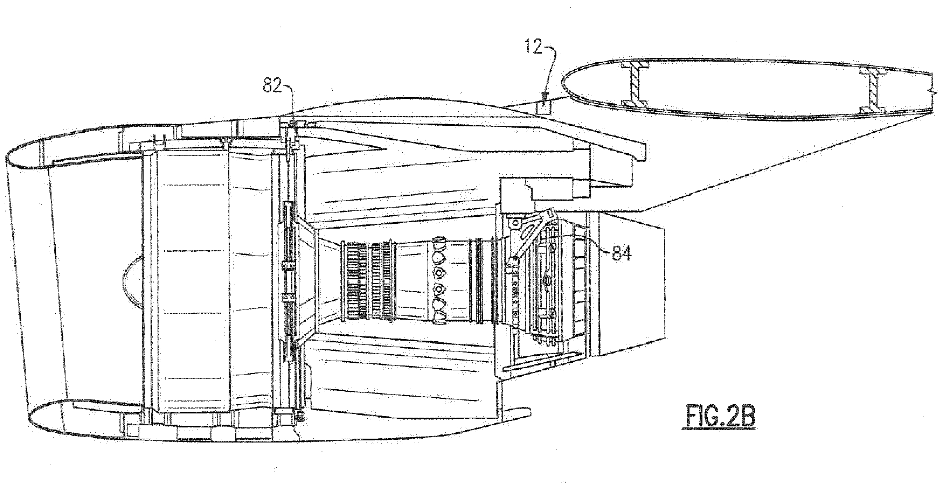

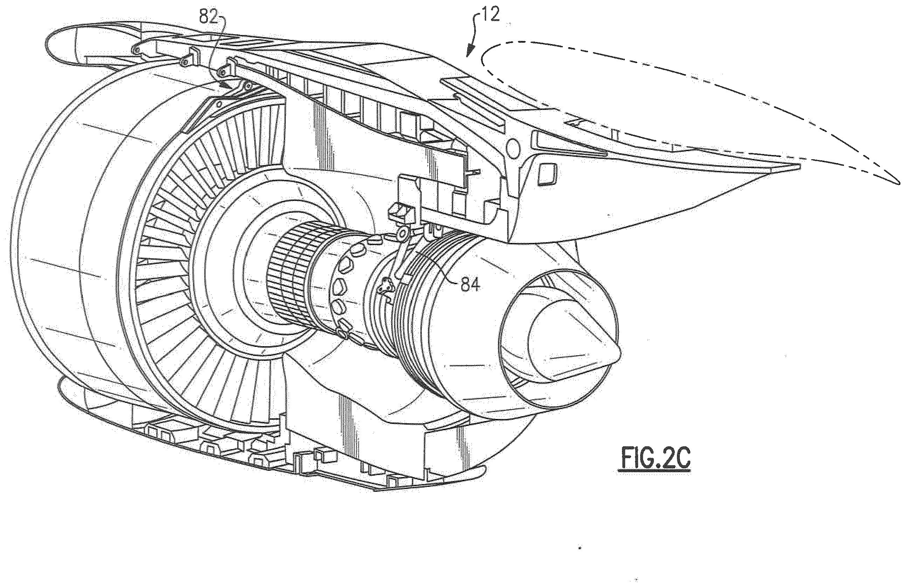

The turbofan gas turbine engine 10 is mounted to aircraft structure such as an aircraft wing through a mount system 80 attachable by the pylon 12. The mount system 80 includes a forward mount 82 and an aft mount 84 (Figure 2A). The forward mount 82 is secured to the IMC 48 and the aft mount 84 is secured to the MTF 70 at the thrust case 52C. The forward mount 82 and the aft mount 84 are arranged in a plane containing the axis A of the turbofan gas turbine 10. This eliminates the thrust links from the intermediate case, which frees up valuable space beneath the core nacelle and minimizes IMC 48 distortion.

Referring to Figures 2A-2C, the mount system 80 reacts the engine thrust at the aft end of the engine 10. The term "reacts" as utilized in this disclosure is defined as absorbing a load and dissipating the load to another location of the gas turbine engine 10.

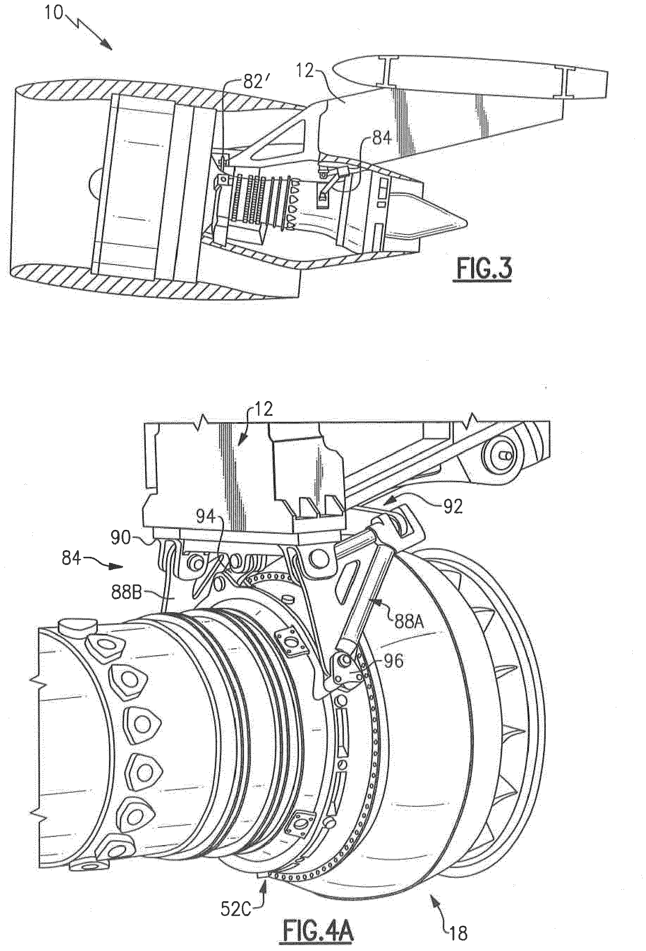

The forward mount 82 supports vertical loads and side loads. The forward mount 82 in one non-limiting embodiment includes a shackle arrangement which mounts to the IMC 48 at two points 86A, 86B. The forward mount 82 is generally a plate-like member which is oriented transverse to the plane which contains engine axis A. Fasteners are oriented through the forward mount 82 to engage the intermediate case (IMC) 48 generally parallel to the engine axis A. In this illustrated non-limiting embodiment, the forward mount 82 is secured to the IMC 40. In another non-limiting embodiment, the forward mount 82 is secured to a portion of the core engine, such as the high-pressure compressor case 50 of the gas turbine engine 10 (see Figure 3). One of ordinary skill in the art having the benefit of this disclosure would be able to select an appropriate mounting location for the forward mount 82.

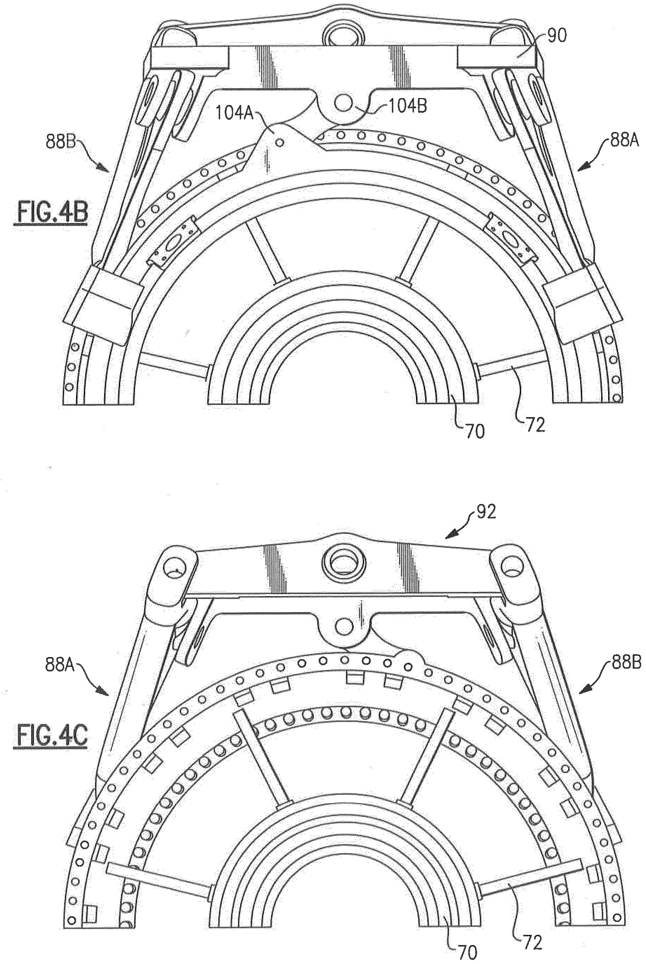

Referring to Figure 4A, the aft mount 84 generally includes a first A-arm 88A, a second A-arm 88B, a rear mount platform 90, a wiffle tree assembly 92 and a drag link 94. The rear mount platform 90 is attached directly to aircraft structure such as the pylon 12. The first A-arm 88A and the second A-arm 88B mount between the thrust case 52C at case bosses 96 which interact with the MTF 70 (Figures 4B-4C), the rear mount platform 90 and the wiffle tree assembly 92. It should be understood that the first A-arm 88A and the second A-arm 88B may alternatively mount to other areas of the engine 10 such as the high pressure turbine case or other cases. It should also be understood that other frame arrangements may alternatively be used with any engine case arrangement.

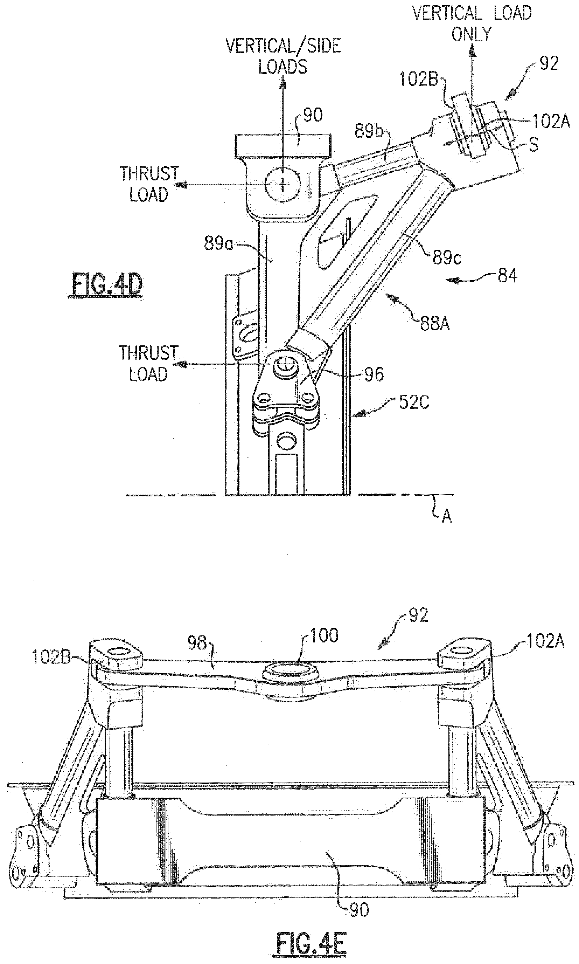

Referring to Figure 4D, the first A-arm 88A and the second A-arm 88B are rigid generally triangular arrangements, each having a first link arm 89a, a second link arm 89b and a third link arm 89c. The first link arm 89a is between the case boss 96 and the rear mount platform 90. The second link arm 89b is between the case bosses 96 and the wiffle tree assembly 92. The third link arm 89c is between the wiffle tree assembly 92 rear mount platform 90. The first A-arm 88A and the second A-arm 88B primarily support the vertical weight load of the engine 10 and transmit thrust loads from the engine to the rear mount platform 90.

The first A-arm 88A and the second A-arm 88B of the aft mount 84 force the resultant thrust vector at the engine casing to be reacted along the engine axis A which minimizes tip clearance losses due to engine loading at the aft mount 84. This minimizes blade tip clearance requirements and thereby improves engine performance.

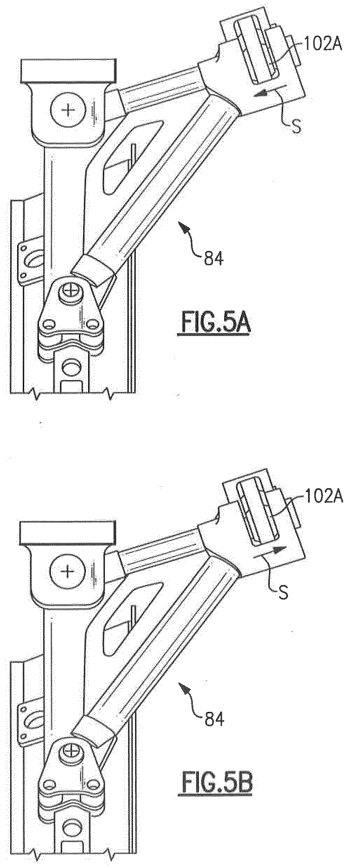

The wiffle tree assembly 92 includes a wiffle link 98 which supports a central ball joint 100, a first sliding ball joint 102A and a second sliding ball joint 102B (Figure 4E). It should be understood that various bushings, vibration isolators and such like may additionally be utilized herewith. The central ball joint 100 is attached directly to aircraft structure such as the pylon 12. The first sliding ball joint 102A is attached to the first A-arm 88A and the second sliding ball joint 102B is mounted to the first A-arm 88A. The first and second sliding ball joint 102A, 102B permit sliding movement of the first and second A-arm 88A, 88B (illustrated by arrow S in Figures 5A and 5B) to assure that only a vertical load is reacted by the wiffle tree assembly 92. That is, the wiffle tree assembly 92 allows all engine thrust loads to be equalized transmitted to the engine pylon 12 through the rear mount platform 90 by the sliding movement and equalize the thrust load that results from the dual thrust link configuration. The wiffle link 98 operates as an equalizing link for vertical loads due to the first sliding ball joint 102A and the second sliding ball joint 102B. As the wiffle link 98 rotates about the central ball joint 100 thrust forces are equalized in the axial direction. The wiffle tree assembly 92 experiences loading only due to vertical loads, and is thus less susceptible to failure than conventional thrust-loaded designs.

The drag link 94 includes a ball joint 104A mounted to the thrust case 52C and ball joint 104B mounted to the rear mount platform 90 (Figures 4B-4C). The drag link 94 operates to react torque.

The aft mount 84 transmits engine loads directly to the thrust case 52C and the MTF 70. Thrust, vertical, side, and torque loads are transmitted directly from the MTF 70 which reduces the number of structural members as compared to current in-practice designs.

The mount system 80 is compact, and occupies space within the core nacelle volume as compared to turbine exhaust case-mounted configurations, which occupy space outside of the core nacelle which may require additional or relatively larger aerodynamic fairings and increase aerodynamic drag and fuel consumption. The mount system 80 eliminates the heretofore required thrust links from the IMC, which frees up valuable space adjacent the IMC 48 and the high pressure compressor case 50 within the core nacelle C.

The scope of protection is defined by the appended claims.

## Claims

1. A gas turbine engine (10) comprising:
a core nacelle (C) defined about an engine centerline axis (A);
a fan nacelle (F) mounted at least partially around said core nacelle (C) to define a fan bypass airflow path for a fan bypass airflow;
a gear train (22, 25) defined along said engine centerline axis (A), said gear train (22, 25) defining a gear reduction ratio of greater than or equal to about 2.3;
a low pressure turbine (18) disposed along said engine centerline axis (A) which drives said gear train (22, 25), **characterised in that** said low pressure turbine (18) is a five stage low pressure turbine;
and **in that** said engine further comprises a fan (20) configured for rotation within the fan nacelle (F) at cruise at 0.8 Mach and 35,000 ft (10,668 m) at a fan pressure ratio less than 1.45, wherein said fan (F) is driven by the low pressure turbine (18) through the gear train (22, 25); and
a variable area fan nozzle axially movable relative to said fan nacelle (F) to vary a fan nozzle exit area (44) and adjust a pressure ratio of the fan bypass airflow during engine operation.

2. The engine (10) as recited in claim 1, wherein said low pressure turbine (18) defines a pressure ratio that is greater than about five.

3. The engine (10) as recited in claim 1 or 2, wherein said fan bypass airflow defines a bypass ratio greater than about ten.

4. The engine (10) as recited in claim 1, 2 or 3, wherein said gear train (22, 25) defines a gear reduction ratio of greater than or equal to about 2.5.

5. The engine (10) as recited in any preceding claim, further comprising a controller operable to control said variable area fan nozzle to vary the fan nozzle exit area (44) and adjust the pressure ratio of the fan bypass airflow.

6. The engine (10) as recited in claim 5, wherein said controller is operable to reduce said fan nozzle exit area at a cruise flight condition, or to control said fan nozzle exit area to reduce a fan instability.

7. The engine (10) as recited in any preceding claim, wherein said variable area fan nozzle defines a trailing edge of said fan nacelle (F).

8. A gas turbine engine (10) as claimed in any preceding claim, being a high bypass gas turbine engine, wherein said low pressure turbine (18) is rotatable along the engine centerline axis (A), and said fan bypass airflow has a bypass ratio greater than about ten.

## Patentansprüche

1. Gasturbinentriebwerk (10), das Folgendes umfasst:
eine Kerngondel (C), die um eine Triebwerksmittellinienachse (A) definiert ist,
eine Lüftergondel (F), die mindestens teilweise um die Kerngondel (C) angebracht ist, um einen Lüfter-Bypass-Strömungsweg für eine Lüfter-Bypass-Strömung zu definieren,
einen Getriebezug (22, 25), der entlang der Triebwerksmittellinienachse (A) definiert ist, wobei der Getriebezug (22, 25) ein Getriebeuntersetzungsverhältnis größer als oder gleich etwa 2,3 definiert;
eine Niederdruckturbine (18), die entlang der Triebwerksmittellinienachse (A) angeordnet ist, die den Getriebezug (22, 25) antreibt, **dadurch gekennzeichnet, dass** es sich bei der Niederdruckturbine (18) um eine fünfstufige Niederdruckturbine handelt, und dadurch, dass das Triebwerk ferner Folgendes umfasst:
einen Lüfter (20), der zur Rotation innerhalb der Lüftergondel (F) im Reiseflug bei 0,8 Mach und 35.000 Fuß (10.668 m) bei einem Lüfterdruckverhältnis von weniger als 1,45 konfiguriert ist, wobei der Lüfter (F) von der Niederdruckturbine (18) durch den Getriebezug (22, 25) angetrieben wird; und
eine Lüfterdüse mit variabler Fläche, die axial relativ zu der Lüftergondel (F) bewegbar ist, um eine Lüfterdüsenaustrittsfläche (44) zu variieren und ein Druckverhältnis der Lüfter-Bypass-Strömung während eines Triebwerksbetriebs anzupassen.

2. Triebwerk (10) nach Anspruch 1, wobei die Niederdruckturbine (18) ein Druckverhältnis definiert, das größer als etwa fünf ist.

3. Triebwerk (10) nach Anspruch 1 oder 2, wobei die Lüfter-Bypass-Strömung ein Bypass-Verhältnis größer als etwa zehn definiert.

4. Triebwerk (10) nach Anspruch 1, 2 oder 3, wobei der Getriebezug (22, 25) ein Getriebeuntersetzungsverhältnis größer als oder gleich etwa 2,5 definiert.

5. Triebwerk (10) nach einem der vorhergehenden Ansprüche, das ferner eine Steuerung umfasst, die betreibbar ist, um die Lüfterdüse mit variabler Fläche zu steuern, um die Lüfterdüsenaustrittsfläche (44) zu variieren und das Druckverhältnis der Lüfter-Bypass-Strömung anzupassen.

6. Triebwerk (10) nach Anspruch 5, wobei die Steuerung betreibbar ist, um die Lüfterdüsenaustrittsfläche unter einer Reiseflugbedingung zu reduzieren oder um die Lüfterdüsenaustrittsfläche zu steuern, um eine Lüfterinstabilität zu reduzieren.

7. Triebwerk (10) nach einem der vorhergehenden Ansprüche, wobei die Lüfterdüse mit variabler Fläche eine Hinterkante der Lüftergondel (F) definiert.

8. Gasturbinentriebwerk (10) nach einem der vorhergehenden Ansprüche, wobei es sich um ein Hochbypass-Gasturbinentriebwerk handelt, wobei die Niederdruckturbine (18) entlang der Triebwerksmittellinienachse (A) rotierbar ist und die Lüfter-Bypass-Strömung ein Bypass-Verhältnis größer als etwa zehn aufweist.

## Revendications

1. Moteur à turbine à gaz (10) comprenant :
une nacelle centrale (C) définie autour d'un axe central de moteur (A) ;
une nacelle de soufflante (F) montée au moins partiellement autour de ladite nacelle centrale (C) pour définir un chemin d'écoulement d'air de dérivation de soufflante pour un écoulement d'air de dérivation de soufflante ;
un train d'engrenages (22, 25) défini le long dudit axe central de moteur (A), ledit train d'engrenages (22, 25) définissant un rapport de réduction d'engrenage supérieur ou égal à environ 2,3 ;
une turbine basse pression (18) disposée le long dudit axe central de moteur (A) qui entraîne ledit train d'engrenages (22, 25), **caractérisé en ce que**
ladite turbine basse pression (18) est une turbine basse pression à cinq étages ;
et **en ce que** ledit moteur comprend en outre
une soufflante (20) configurée pour tourner à l'intérieur de la nacelle de soufflante (F) en vol de croisière à 0,8 Mach et 35 000 pieds (10 668 m) à un rapport de pression de soufflante inférieur à 1,45, dans lequel ladite soufflante (F) est entraînée par la turbine basse pression (18) à travers le train d'engrenages (22, 25) ; et
une buse de soufflante à zone variable déplaçable axialement par rapport à ladite nacelle de soufflante (F) pour faire varier une zone de sortie de buse de soufflante (44) et régler un rapport de pression de l'écoulement d'air de dérivation de soufflante pendant le fonctionnement du moteur.

2. Moteur (10) selon la revendication 1, dans lequel ladite turbine basse pression (18) définit un rapport de pression qui est supérieur à environ cinq.

3. Moteur (10) selon la revendication 1 ou 2, dans lequel ledit écoulement d'air de dérivation de soufflante définit un rapport de dérivation supérieur à environ dix.

4. Moteur (10) selon la revendication 1, 2 ou 3, dans lequel ledit train d'engrenages (22, 25) définit un rapport de réduction d'engrenage supérieur ou égal à environ 2,5.

5. Moteur (10) selon une quelconque revendication précédente, comprenant en outre un dispositif de commande pouvant fonctionner pour commander ladite buse de soufflante à zone variable pour faire varier la zone de sortie de buse de soufflante (44) et régler le rapport de pression de l'écoulement d'air de dérivation de soufflante.

6. Moteur (10) selon la revendication 5, dans lequel ledit dispositif de commande peut fonctionner pour réduire ladite zone de sortie de buse de soufflante dans une condition de vol de croisière, ou pour commander ladite zone de sortie de buse de soufflante afin de réduire une instabilité de soufflante.

7. Moteur (10) selon une quelconque revendication précédente, dans lequel ladite buse de soufflante à section variable définit un bord de fuite de ladite nacelle de soufflante (F).

8. Moteur à turbine à gaz (10) selon une quelconque revendication précédente, étant un moteur à turbine à gaz à dérivation élevée, dans lequel ladite turbine basse pression (18) peut tourner le long de l'axe central de moteur (A), et ledit écoulement d'air de dérivation de soufflante a un rapport de dérivation supérieur à environ dix.
